# EUROPÄISCHE PATENTSCHRIFT

(11) **EP 1 424 297 B1**
(45) Veröffentlichungstag und Bekanntmachung des Hinweises auf die Patenterteilung: **28.12.2005**
(21) Anmeldenummer: 03025137.5
(22) Anmeldetag: 03.11.2003
(51) Int. Cl.: B65G 47/71

(54) **Vorrichtung zum Auseinanderführen eines Behälterstromes**
Container stream separating device
Dispositif pour séparer un flux de conteneurs

(30) Priorität: 29.11.2002 DE 10255814
(43) Veröffentlichungstag der Anmeldung: 02.06.2004
(73) Patentinhaber: KHS Maschinen- und Anlagenbau Aktiengesellschaft, 44143 Dortmund (DE)
(72) Erfinder: Böcker, Horst, 58239 Schwerte (DE); Paroth, Berthold, 44289 Dortmund (DE); Scholz, Ulrich, 59348 Lüdinghausen (DE)

(56) Entgegenhaltungen:
- CA-A- 2 259 816
- DE-A- 2 727 277
- DE-A- 4 301 563
- DE-A- 19 751 967
- DE-U- 20 218 522
- US-A- 4 844 234

## Beschreibung

Die einzelnen Produktionsmaschinen innerhalb einer Gesamtanlage der Getränkeindustrie werden zum Transport der zu behandelnden Behälter, wie z.B. Flaschen, Dosen oder dergleichen, in der Regel durch Behältertransportanlagen verbunden.

Während des Transports der Behälter auf diesen Transportanlagen ist es häufia erfordertich, den Behälterstrom umzuformen (siehe z.B. das Dokument DE-A-19 751 967). Dabei wird z.B. ein mehrreihiger Behälterstrom, wie er z.B. am Auslauf einer Reinigungsmaschine entsteht, in einen einreihigen Behälterstrom umgewandelt, damit er z.B. einer Inspektionsmaschine zugeführt werden kann.

Eine weitere Aufgabe besteht z.B. in der Umwandlung eines einreihigen Behälterstromes in einen mehrreihigen Behälterstrom, was z.B. bei der Verwendung von Speichertischen oder auf dem Weg der Behälter von einer Etikettiermaschine zu einem Einpacker erforderlich sein kann.

Eine bei der Gestaltung von Behältertransportanlagen ebenfalls zu lösende Aufgabe besteht in der Auseinanderführung von Behälterströmen.

Eine Auseinanderführung kann z.B. dann erforderlich sein, wenn der von einer leistungsstarken Reinigungsmaschine kommende Behälterstrom auf mehrere nachfolgende Inspektionsmaschinen aufgeteilt werden soll.

Nachfolgend wird ausschließlich die Aufteilung von Behälterströmen behandelt.

Zu den Hauptproblemen bei der Aufteilung von Behälterströmen zählen die Lärmentwicklung, die Kippgefahr der Behälter und der an den Behältern aufgrund einer unvorteilhaften, nicht schonenden Behandlung auftretende Verschleiß.

Zur Lösung dieser Aufgabe sind mehrere Vorschläge unterbreitet geworden.

Zunächst ist es bekannt, in der Regel spitz auslaufende Führungselemente so in einem mehrreihigen Behälterstrom anzuordnen, dass dieser auf die Führungselemente aufläuft und von diesen in mindestens zwei Teilströme aufgeteilt wird. Beispielhaft für die zahlreichen derartigen Ausgestaltungen sei an dieser Stelle die DE 2727277 genannt.

Nachteilig an derartigen Ausgestaltungen ist, dass die Behälter ungebremst auf das Führungselement auftreffen, wobei es ebenfalls von Nachteil ist, dass die Behälter ihre ursprüngliche Bewegungsrichtung zunächst beibehalten und somit erst durch das Auftreffen auf das Führungselement und/oder andere Behälter eine neue Bewegungsrichtung erhalten.

Von besonderem Nachteil ist es ebenfalls, dass es bei derartigen Ausgestaltungen immer wieder vorkommt, dass Behälter nahezu geradlinig auf die Spitze des Führungselements auftreffen. In solchen Fällen wird der Behälter zunächst keinem der Teilströme zugeführt. Vielmehr kommt es in derartigen Situationen regelmäßig zu Störungen des kontinuierlichen Behälterflusses und nicht zuletzt auch zum Umfallen einzelner oder mehrerer Behälter. Diese Auswirkungen sind in der Praxis in höchstem Maße unerwünscht. Darüber hinaus verursachen die zuvor beschriebenen Prozesse einen hohen Behälterverschleiß und eine erhebliche Lärmentwicklung.

Ebenfalls bekannt geworden ist eine Anmeldung nach DE 44 35 199.
Auch im Rahmen diese Entwurfs wird zur Aufteilung eines Behälterstromes im wesentlichen vorgeschlagen, ein Führungselement im Behälterstrom anzuordnen, wobei eine gewisse Verbesserung dadurch erreicht wird, dass die zugeführten Behälter auf besondere Weise der Aufteilungsstelle zugeführt werden. Dazu werden die Behälter zunächst einem Führungskanal zugeführt, der in seiner Breite so bemessen ist, dass sich die Behälter mit einem gewissen seitlichen Versatz quasi zweireihig ausrichten.

Durch diese Ausrichtung der Behälter wird zwar ein direktes und geradliniges Auftreffen selbiger auf die Spitze des Führungselementes vermieden, dennoch ändert sich die Bewegungsrichtung der Behälter auch bei dieser Ausgestaltung erst durch das Auftreffen der Behälter auf das Führungselement und/oder andere Behälter. Die oben beschriebenen Nachteile sind folglich im wesentlichen auch bei dieser Ausgestaltung gegeben.

Aufgabe und Ziel der vorliegenden Erfindung ist es, hier Abhilfe und Verbesserung zu schaffen, so dass Lärmentwicklung, erhöhter Behälterverschleiß und Störungen des Behälterflusses sicher vermieden werden. Dazu sieht die vorliegende Erfindung vor, dass die bei Transportanlagen üblichen Transportbänder innerhalb der Auseinanderführung so geführt werden, dass sie den Behälterstrom schon vor einem im Behälterstrom angeordneten Führungselement auseinander führen und aufteilen.

Im Nachfolgenden wird die Erfindung anhand von Ausführungsbeispielen näher erläutert. Im Einzelnen zeigt die
- Figur 1: die Draufsicht einer erfindungsgemäßen Auseinanderführung, und die
- Figur 2: die Draufsicht einer mehrstufigen Auseinanderführung.

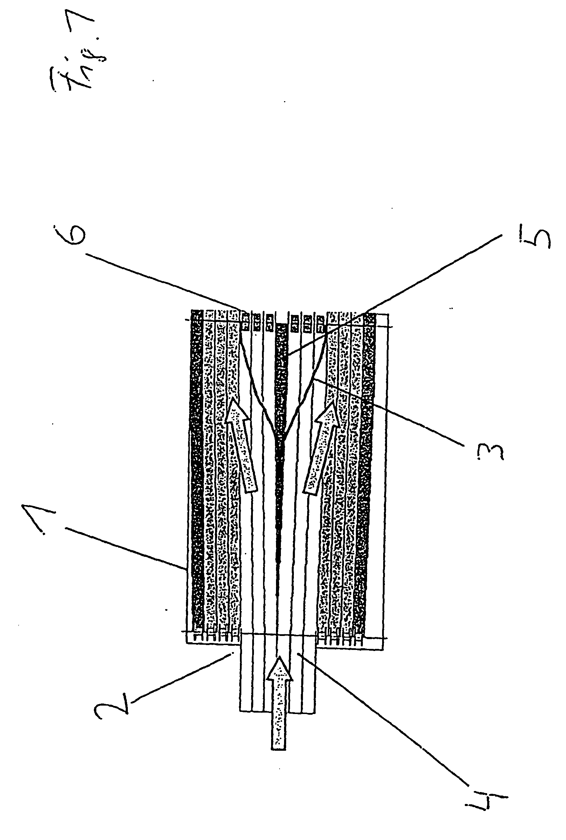

Wie in der Figur 1 dargestellt, besteht eine Auseinanderführung zunächst aus einem bekannten Transporteurgerüst 1, welches mit einem Behältereinlauf 2 und einem Führungselement 3 versehen ist.
Da eine Auseinanderführung auch Bestandteil übergeordneter Anlagenkomponenten wie z.B. Speichertischen oder Sortieranlagen sein kann, werden die weiteren konstruktiven Gestaltungsmöglichkeiten der Auseinanderführung nach der Aufteilung des Behälterstromes bzw. nach dem Ende des Führungselementes 3 an dieser Stelle nicht behandelt.

Bei einer erfindungsgemäßen Auseinanderführung ist vorgesehen, dass die Behälter durch mindestens zwei Einlaufbänder 4 der Auseinanderführung zugeführt werden. In weiteren Ausgestaltungen können aber auch beliebige andere Bandzahlen vorgesehen sein.

Um die Aufteilung des Behälterstromes an dem im Behälterstrom angeordneten Führungselement 3 möglichst vorteilhaft ablaufen zu lassen, ist bei der vorliegenden Erfindung vorgesehen, die Einlaufbänder 4 auf ihrem Weg vom Behältereinlauf 2 zum Führungselement 3 so zu führen, dass diese mit einem vorbestimmten Winkel auseinander laufen. Dieses hat zur Folge, da die von den Einlaufbändern 4 transportierten Behälter der Bewegungsrichtung der Einlaufbänder 4 folgen, dass sich der Behälterstrom in zwei Teilströme aufteilt, wobei sich zwischen den Teilströmen eine keilförmige Lücke bildet. Gleichzeitig erhalten die Behälter durch die horizontale Schrägstellung der Einlaufbänder 4 eine geänderte Bewegungsrichtung, so dass sie in einem günstigern Winkel auf das Führungselement 3 auftreffen. Durch die im Behäfterstrorn erzeugte Lücke wird sicher verhindert, dass Behälter auf die Spitze des Führungselementes 3 auftreffen.

Die sich durch das Auseinanderlaufen der Einlaufbänder 4 ergebende Lücke auf der Oberfläche der Auseinanderführung wird erfindungsgemäß durch geeignete Mittel verschlossen. Dabei kann es sich z.B., wie in der Figur 1 dargestellt, um ein Gleitblech 5 oder aber auch um andere bekannte Komponenten handeln. Die Oberflächen von Gleitblech 5 und den Einlaufbändern 4 der Auseinanderführung sollen auf einer Ebene liegen.

In der Praxis hat es sich als besonders vorteilhaft herausgestellt, wenn der Winkel, mit dem die Einlaufbänder 4 auseinandergeführt werden, so gewählt wird, dass die Breite des Gleitbleches 5 an der Spitze des Führungselementes 3 kleiner ist als die Standfläche der transportierten Behälter. Durch diese konstruktive Gestaltung wird gewährleistet, dass sich keine Behälter auf dem Gleitblech 5 ansammeln können, vielmehr ist somit ein sicherer Abtransport der Behälter sichergestellt.

Untersuchungen haben ergeben, dass bis zu einem Winkel der Einlaufbänder 4 zueinander bis zu 1,5 Grad normale, für den Geradeaustransport geeignete Transportketten verwendet werden können. Bei einem Winkel größer als 1,5 Grad ist die Verwendung von kurvengängigen Ketten vorteilhaft.

Um bei höheren Transportbandgeschwindigkeiten ein Flattern und/oder Abheben der Transportbänder von ihren Führungen zu vermeiden, bietet es sich an, in solchen Fällen Magnet-Transportbänder zu verwenden, da diese durch die zusätzlich zur Schwerkraft wirkende Magnetkraft besser in ihren Führungen gehalten werden.

Zur Umlenkung und zur verbesserten Führung und Abstandshaltung der Einlaufbänder 4 kann in besonders vorteilhaften Ausgestaltungen der vorliegenden Erfindung innerhalb der Auseinanderführung auch die Verwendung einer Umlenkstation 6 vorgesehen sein. Dabei ist es überaus sinnvoll, die geometrischen Abmessungen so zu wählen, dass die Einlaufbänder 4 aufgrund ihrer Schrägstellung innerhalb der Umlenkstationen einen solchen Abstand zueinander haben, der genau der Breite eines Einlaufbandes 4 entspricht. In weiteren Ausgestaltungen können aber auch andere Abstände vorgesehen sein, wobei ganzzahlige Einlaufbandbreiten von besonderem Vorteil sind.

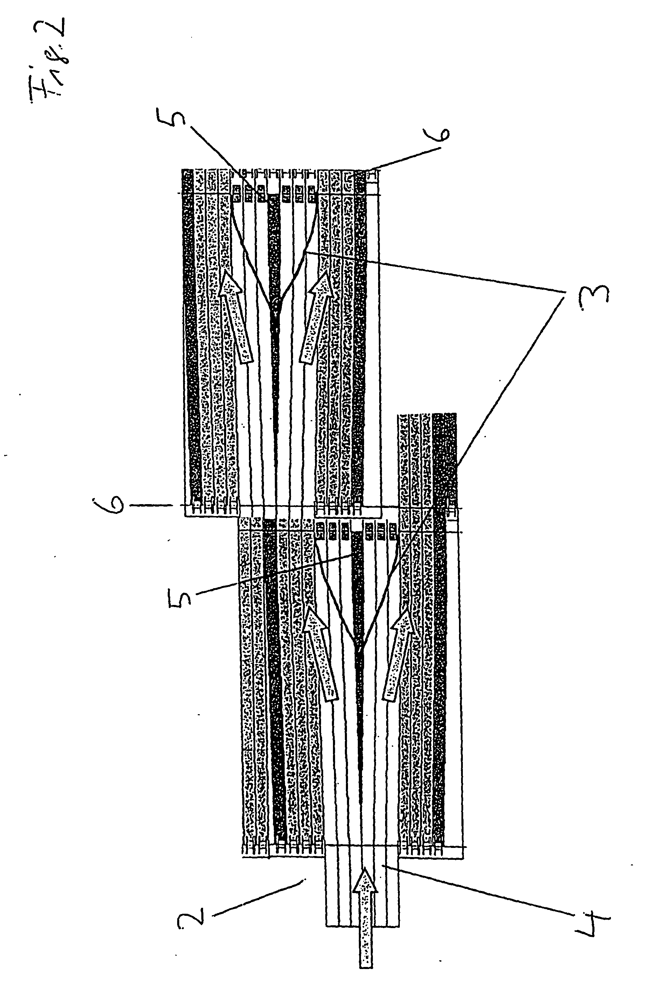

In weiteren eigenständigen Fortbildungen der vorliegenden Erfindung kann auch vorgesehen sein, zwei oder mehrere erfindungsgemäße Auseinanderführungen hintereinander zu schalten. Ein entsprechendes Ausführungsbeispiel ist in der Figur 2 dargestellt.

Werden mehrere Auseinanderführungen hintereinander geschaltet, so ergeben sich zahlreiche Kombinationsmöglichkeiten für die konstruktive Gestaltung. Beispielsweise können weitere, im Anschluss an die erste Auseinanderführung angeordnete Auseinanderführungen beidseitig oder auch nur einseitig dieser ersten Auseinanderführung angeordnet werden, so dass die Behälterströme entsprechend der betrieblichen Erfordernisse aufgeteilt und weitergeleitet werden können.

Durch derartige Ausgestaltungen kann eine mehrfache Aufteilung des Behälterstromes auf besonders vorteilhafte Art und Weise erreicht werden, wobei der Platzbedarf und der finanzielle Aufwand für eine derartige Anlage besonders gering sind.

Anwendung für eine erfindungsgemäße Auseinanderführung ergeben sich in der Praxis z.B. bei Speichertischen, die Aufteilung von Behälterströmen vor Gefäßbehandlungsmaschinen wie z.B. Etikettierern, Inspektionsmaschinen oder Packmaschinen.

## Patentansprüche

1. Vorrichtung zur Auseinanderführung und Aufteilung von Behälterströmen mit mindestens einem Behältereinlauf (2), mindestens zwei Einlaufbändern (4) und mindestens einem, im Behälterstrom angeordneten Führungselement (3), wobei die bei Transportanlagen üblichen Transportbänder innerhalb der Auseinanderführung so geführt werden, dass sie den Behälterstrom auseinander führen und aufteilen, **dadurch gekennzeichnet, dass** die sich zwischen den Einlaufbändern (4) ergebende Lücke durch mindestens ein Gleitblech (5) abgedeckt wird.

2. Vorrichtung nach Anspruch 1, **dadurch gekennzeichnet, dass** innerhalb der Auseinanderführung eine Umlenkstation (6) vorgesehen ist.

## Claims

1. Apparatus for separating and dividing streams of containers, said apparatus induding at least one container inlet (2), at least two inlet belts (4) and at least one guiding element (3) disposed in the container stream, wherein the conventional conveyor belts in conveying systems are guided within the separating means in such a manner that they separate and divide the container flow, **characterised in that** the gap produced between the inlet belts (4) is covered by at least one metal sliding plate (5).

2. Apparatus according to daim 1, **characterised in that** a guide station (6) is provided internally of the separating means.

## Revendications

1. Dispositif permettant de séparer et de répartir des flux de récipients, comprenant au moins une entrée de récipients (2), au moins deux bandes d'introduction (4) et au moins un élément de guidage (3) disposé dans le flux de récipients, les bandes transporteuses que l'on utilise habituellement dans les installations de transport étant montées, dans le dispositif de séparation, de telle sorte qu'elles séparent et répartissent le flux de récipients, **caractérisé en ce que** l'espace créé entre les bandes d'introduction (4) est recouvert par au moins une tôle de guidage (5).

2. Dispositif selon la revendication 1, **caractérisé en ce qu'**un poste de déviation (6) est prévu à l'intérieur du dispositif de séparation.
